# EUROPEAN PATENT APPLICATION

(11) **EP 1 538 814 A1**
(43) Date of publication of application: **08.06.2005**
(21) Application number: 04027781.6
(22) Date of filing: 23.11.2004
(51) Int. Cl.: H04M 1/02

(54) **Sliding/folding-type portable digital communication apparatus**

(30) Priority: 26.11.2003 KR 2003084431
(71) Applicant: Samsung Electronics Co., Ltd., Suwon-si, Gyeonggi-do (KR)
(72) Inventor: Kim, Jong-Woo, Yeongtong-gu, Suwon-si, Gyeonggi-do (KR); Yoon, Young-Seok, Yeongtong-gu, Suwon-si, Gyeonggi-do (KR); Kwan, Ki-Joon, Yeongtong-gu, Suwon-si, Gyeonggi-do (KR)
(74) Representative: Grünecker, Kinkeldey, Stockmair & Schwanhäusser Anwaltssozietät

(57) **Abstract**

A sliding/folding-type portable digital communication apparatus having a first housing (100); a sliding/hinge housing (200) positioned on a bottom surface (100b) of the first housing (100) and adapted to perform a sliding movement along a longitudinal direction of the first housing (100); and a rotational housing (300) rotatably coupled to the sliding/hinge housing (200) in such a manner that its top surface (300a) or bottom surface (300b) can selectively face the bottom surface (100b) of the first housing (100) according to whether or not it has been rotated.

## Description

The present invention relates to portable communication apparatuses, such as cellular phones, PDAs (personal digital assistants), HHPs (hand held phones), and PCS (personal communication service) phones, and more particularly to a sliding/folding-type portable digital communication apparatus.

In general, a "portable communication apparatus" refers to an electronic apparatus which a user can carry with him/her to perform wireless communication with a desired partner. In consideration of portability, such portable communication apparatuses have been designed to be compact, slim, and light, and also to provide multimedia availability, having a wider variety of functions. In particular, future portable communication apparatuses are being developed to incorporate greater multi-functionality and multi-purpose utilization, as well as to be more compact and lighter, and will also be designed to be suitable for various multimedia environments or Internet environments. Additionally, such portable communication apparatuses are now recognized by some people as a nearly indispensable commodity which must always be carried.

Conventional portable communication apparatuses may be classified into various types according to their appearance, such as bar-type portable communication apparatuses, flip-type portable communication apparatuses, and folder-type portable communication apparatuses. The bar-type portable communication apparatus has a single housing shaped like a bar. The flip-type portable communication apparatus has a flip which is pivotably mounted to a bar-shaped housing by a hinge unit. The folder-type portable communication apparatus has a folder coupled to a single bar-shaped housing by a hinge unit in such a manner that the folder can be rotated in order to be folded to or unfolded from the housing.

Further, portable communication apparatuses may be classified into neck wearable type communication apparatuses and wrist wearable type communication apparatuses according to the position at or the way in which a user puts on the communication apparatus. The neck wearable type communication apparatus is one which a user wears around the neck using a string or lanyard, while the wrist wearable type communication apparatus is one which a user wears on the wrist.

Additionally, portable communication apparatuses may be classified into rotation-type communication apparatuses and sliding-type communication apparatuses according to of the manner in which the user opens and closes the communication apparatuses. In the rotation-type portable communication apparatus, two housings are coupled to each other in such a manner that one housing rotates to be opened or closed relative to the other while the housings remain facing each other. In the sliding-type portable communication apparatus, two housings are coupled to each other in a manner that one housing slides to be opened or closed relative to the other. These variously classified portable communication apparatuses can be easily understood by those skilled in the art.

Meanwhile, conventional portable communication apparatuses may now include a function of transmitting data at a high speed in addition to the basic function of performing voice communication. In other words, according to increased demand by consumers, portable communication apparatuses may now provide a service using a wireless communication technology capable of transmitting data at a high speed.

Recent portable communication apparatuses have also been equipped with a camera lens which enables the communication apparatuses to transmit an image signal. That is, current conventional portable communication apparatuses may have an imbedded or external camera lens or a photographing means which enables a user to make an image communication with a desired partner or to take a photograph of a desired subject.

However, conventional portable communication apparatuses, in particular folder-type communication apparatuses, have a problem in that, although they are convenient to carry with one hand, they have limited space to mount display devices or many keys. As such, there is a need for folder-type communication apparatuses which can accommodate wider display devices and mount more keys.

Furthermore, conventional sliding-type portable communication apparatuses, such as those disclosed in Korean Patent Application No. 2002-71991 (the contents of which are hereby incorporated by reference), can be inconvenient when a user attempts to perform more complicated data input, since they have limited space to mount more keys, and their housings, on which many electronic components are mounted, have limited space availability.

Accordingly, the present invention has been made to solve the above-mentioned problems occurring in the prior art, and the object of the present invention is to provide a portable digital communication apparatus which combines the advantages of sliding-type and folding-type apparatuses and is convenient to use.

This object is solved by the subject matter of the independent claims.

Preferred embodiments are defined by the dependent claims.

In order to accomplish this object and other objects, there is provided a portable digital communication apparatus including a first housing; a sliding/hinge housing which is positioned on a bottom surface of the first housing and is adapted to perform a sliding movement along a longitudinal direction of the first housing; and a rotational housing rotatably coupled to the sliding/hinge housing in such a manner that its top surface or bottom surface can selectively face the bottom surface of the first housing according to whether or not it has been rotated.

In accordance with another aspect of the present invention, there is provided a portable digital communication apparatus including a first housing extending in a longitudinal direction; a sliding/hinge housing which is positioned on a bottom surface of the first housing, surrounded by edges of the bottom surface, and adapted to perform a sliding movement along the longitudinal direction; and a rotational housing provided with, on its top surface, a number of keys which are exposed or hidden according to whether or not the sliding/hinge housing has been moved, the rotational housing being coupled to the sliding/hinge housing in such a manner that it can be rotated about a hinge axis, which extends perpendicularly to the longitudinal direction and penetrates a side surface of the sliding/hinge housing, so that its top surface or bottom surface can selectively face the bottom surface of the first housing, according to whether or not it has been rotated, and adapted to expose the sliding/hinge housing regardless of whether or not it has been rotated.

In accordance with still another aspect of the present invention, there is provided a portable digital communication apparatus including a first housing; a sliding/hinge housing which is provided with a first speaker unit, positioned on a bottom surface of the first housing, surrounded by edges of the bottom surface, and adapted to perform a sliding movement along a longitudinal direction of the first housing; and a rotational housing adapted to perform a sliding movement along the longitudinal direction relative to the first housing and face the bottom surface of the first housing, as well as a part of a side surface of the sliding/hinge housing, the rotational housing being rotatably coupled to the sliding/hinge housing in such a manner that its top surface or bottom surface can selectively face the bottom surface of the first housing according to whether or not it has been rotated.

The above and other features and advantages of the present invention will be more apparent from the following detailed description taken in conjunction with the accompanying drawings, in which:
FIG. 1 is a front perspective view showing a portable digital communication apparatus according to a preferred embodiment of the present invention;
FIG. 2 is a rear perspective view showing a portable digital communication apparatus according to a preferred embodiment of the present invention;
FIG. 3 is a front view showing a portable digital communication apparatus according to a preferred embodiment invention, wherein its speaker housing is fully slid;
FIG. 4 is a side view of the portable digital communication apparatus shown in FIG. 3;
FIG. 5 is a perspective view of the portable digital communication apparatus shown in FIG. 2;
FIG. 6 is a front view showing a portable digital communication apparatus according to a preferred embodiment invention, wherein its rotational housing has been rotated about 180°;
FIG. 7 is a bottom view of the portable digital communication apparatus shown in FIG. 6; and
FIG. 8 is a side view of the portable digital communication apparatus shown in FIG. 6.

Hereinafter, preferred embodiments of the present invention will be described with reference to the accompanying drawings. In the following description of the present invention, a detailed description of known functions and configurations incorporated herein will be omitted when it may make the subject matter of the present invention unclear.

The present invention is directed to a sliding/folding-type portable digital communication apparatus combining the advantages of sliding-type and folding-type apparatuses.

There are presently conventional sliding-type portable apparatuses have two housings, which are adapted to move linearly along their longitudinal direction while continuously facing each other. They are advantageous in that they can provide a wide display screen and their housings easily slide to be opened/closed with one hand. Meanwhile, other conventional folding-type portable apparatuses have two housings, which are adapted to be rotated, by means of a hinge unit, within a predetermined angle with respect to each other to be opened/closed. They are advantageous in that they are convenient to carry with one hand and speech operations are easily performed with one hand.

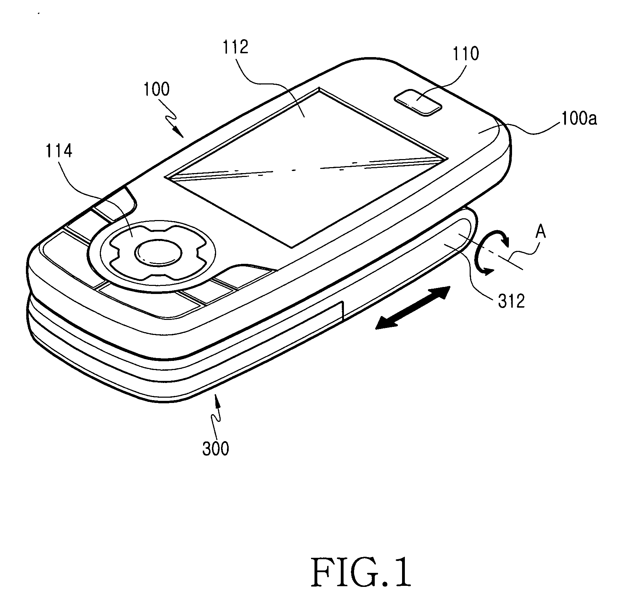

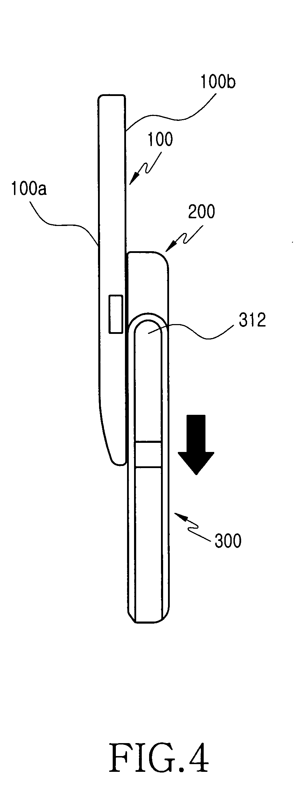

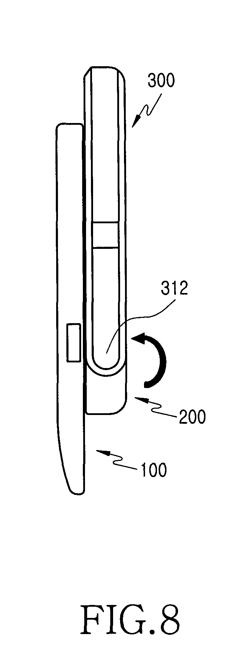

As shown in FIGs. 1 to 8, a portable digital communication apparatus according to a preferred embodiment of the present invention includes a first housing 100; a sliding/hinge housing 200 positioned on a bottom surface 100b of the first housing 100 and adapted to slide in a longitudinal direction of the first housing 100; and a rotational housing 300 rotatably coupled to the sliding/hinge housing 200 in such a manner that its top surface 300a or bottom surface 300b can face the bottom surface 100b of the first housing 100.

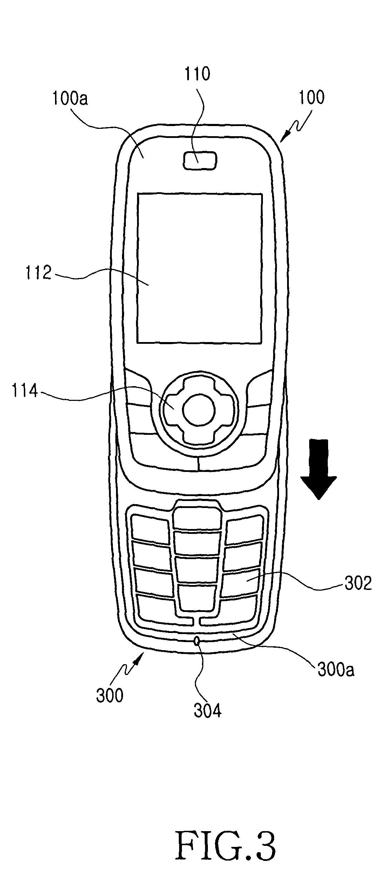

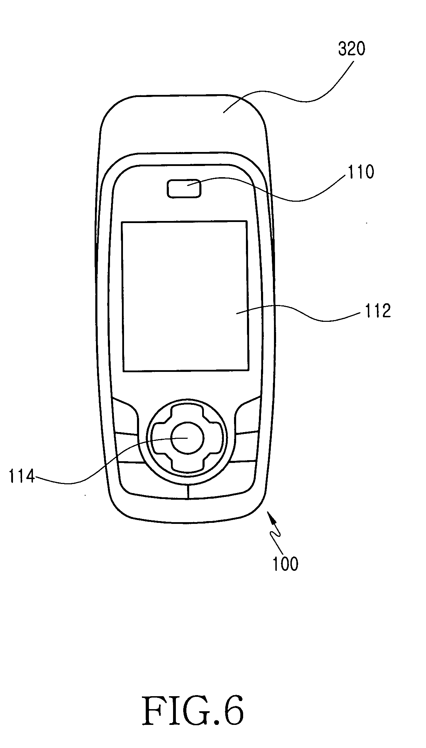

Specifically, the rotational housing 300 is coupled to the sliding/hinge housing 200 in such a manner that, prior to rotation, its top surface 300a faces the bottom surface 100b of the first housing and, when it is rotated 180°, its bottom surface 300b faces the bottom surface 100b of the first housing. The former case is shown in FIGs. 3 -5, while the latter case is shown in FIGs. 6-8.

The sliding/hinge housing 200 and/or the rotational housing 300 may be operated by a user manually. Alternatively, a semi-automatic or automatic power source may be provided for that operation.

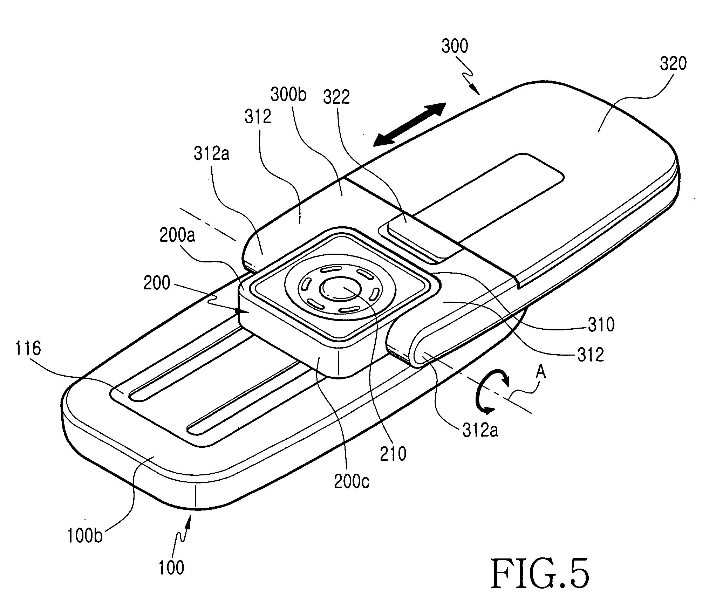

The sliding/hinge housing 200 is surrounded by edges of the bottom surface 100b of the first housing and is adapted to slide a predetermined distance on the bottom surface 100b, as shown in FIG. 5.

Referring to FIG, 1, the first housing 100 is provided with, on its top surface 100a, a speaker unit 110; a display unit 112 disposed adjacent to the speaker unit 110; and a first key array 114 composed of a number of keys disposed adjacent to the display unit 112. The display unit 112 may be composed of an LCD, a touch screen, or a hologram screen. The first key array 114 may be composed of a number of keys, including direction keys, navigation keys, speech keys, and the like.

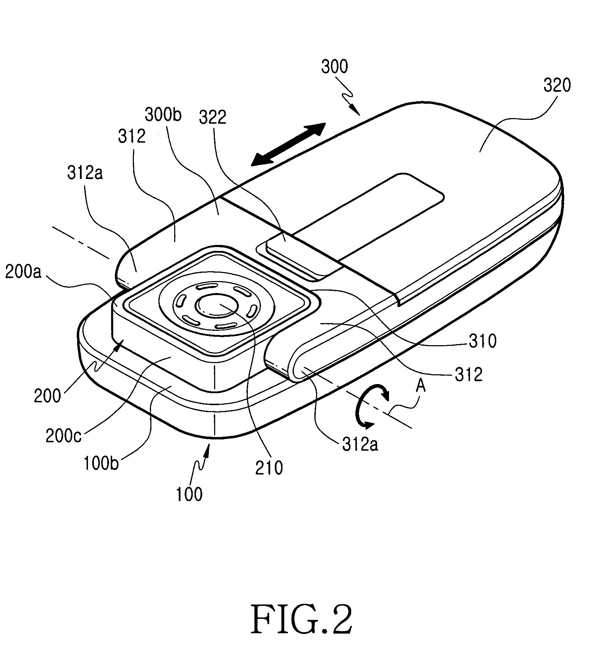

Referring to FIG. 2, the sliding/hinge housing 200 is provided with a speaker unit 210 on its surface 200a and a sliding module (not shown), which enables it to slide relative to the first housing 100. Since the sliding/hinge housing 200 may be provided with a speaker unit 210 and related components therein, in this regard it may be referred to as a "sliding/hinge speaker housing". The speaker unit 210 is preferably composed of a stereo speaker unit to provide stereo sound. Although not shown in the drawing, the sliding/hinge housing may be provided with two speaker units 210 therein.

Preferably, the speaker unit 210 of the sliding/hinge housing 200 is always exposed regardless of whether or not the rotational housing 300 has been rotated. As will be described below, the rotational housing 300 has a pair of connecting arms 312 and defines an opening 310 having a predetermined shape, which is located between the connecting arms 312, so that the speaker unit 210 is always visually exposed to outside.

The rotational housing 300 is coupled to the sliding/hinge housing 200 in such a manner that it can be rotated approximately 180° about a hinge axis A. Each end 312a of the connecting arms 312 of rotational housing 300 is coupled a side surface 200c of the sliding/hinge housing 200, so that the sliding/hinge housing 200 is positioned in the opening 310. The pair of connecting arms 312 face the side surface 200c of the sliding/housing and enclose an area of the sliding/hinge housing 200.

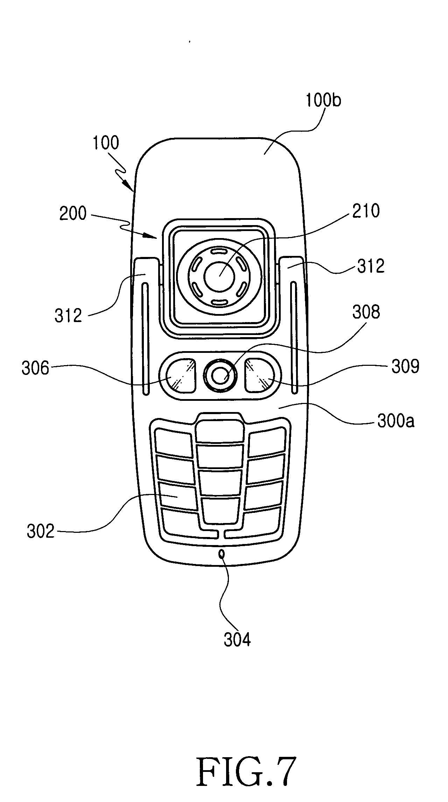

Referring to FIG. 3 and 7, the rotational housing 300 is provided with, on its top surface 300a, a mirror plate, specifically a mirror 306; a camera lens 308 disposed adjacent to the mirror 306; a lighting unit 309 disposed adjacent to the camera lens; a second key array 302 composed of a number of keys disposed adjacenty to the lighting unit; and a microphone unit 304 disposed adjacent to the second key array 302. The rotational housing 300 is provided with, on its bottom surface 300b, a battery pack 320 and a locking knob 322, which is adapted to fasten/release the battery pack 320 for charging, as shown in FIG. 2. The lighting unit is composed of a conventional LCD. The second key array 302 is composed of a number of keys, including numeric keys, character keys, function keys, and the like.

As shown in FIGs. 1 and 3, the first key array 114, which is positioned on the top surface 100a of the first housing, is always visually exposed to a user, while the second key array 302, which is positioned on the top surface 300a of the rotational housing, is exposed or hidden according to whether or not the first housing 100 is moved. In other words, if the first housing 100 is moved upward or the sliding/hinge housing 200 is moved downward, the second key array 302 is visually exposed to a user and can be used. If the first housing 100 and the sliding/hinge housing 200 are positioned as shown in FIG. 3, the first and second key arrays 114 and 302 are disposed adjacent to each other.

Reference numeral 116, as shown in FIG. 5, denotes a guide rail, which is preferably made of a metallic material and is provided with two guide openings.

If the sliding/hinge housing 200 is first moved to the position shown in FIG. 5, and then rotated approximatly 180°, as shown in FIG. 6, the battery pack 320 and the speaker unit 110 are disposed adjacent to each other. The range of rotation of the rotational housing 300 is limited to 180° or less, so that it cannot be rotated further.

If the sliding/hinge housing 200 is rotated approximately 180°, as shown in FIGs. 6 and 7, the mirror 306 and the camera lens 308, which are positioned on the top surface 300a of the rotational housing 300, are exposed to the outside. In other words, the mirror 306 and the camera lens 308 are visually exposed to a user only when the rotational housing 300 has undergone a rotational movement. As shown in FIG. 7, the speaker unit 210 is disposed adjacent to the mirror 306 and the camera lens 308, and the mirror 306 and the camera lens 308 are disposed adjacent to the second key array 302.

The sliding/hinge housing 200 has a linear sliding direction which is perpendicular to a hinge axis A of the rotational housing 300. The hinge axis A is oriented in such a manner that it penetrates the side surface 200c of the sliding/hinge housing.

A sliding/folding-type portable digital communication apparatus according to the present invention may be used as follows: in the position shown in FIGs. 1 and 2, a user can perform voice communication with a partner. As the position shown in FIG. 3 corresponds to a mode wherein a user performs a more complicated data input operation, such as text message input. In the position shown in FIGs. 6 and 7, a user can perform video communication with a partner or take pictures of a desired object using a lighting unit.

As mentioned above, the present invention provides a portable digital communication apparatus which combines the advantages of sliding-type and folding-type apparatuses, so that a user can operate keys and take pictures of a desired object in a more convenient way.

While the invention has been shown and described with reference to certain preferred embodiments thereof, it will be understood by those skilled in the art that various changes in form and details may be made therein without departing from the scope of the invention as defined by the appended claims.

## Claims

1. A portable digital communication apparatus comprising:
a first housing;
a sliding/hinge housing which is positioned on a bottom surface of the first housing and is slidable along a longitudinal direction of the first housing; and
a rotational housing rotatably coupled to the sliding/hinge housing in such a manner that its top surface or bottom surface can selectively face the bottom surface of the first housing according to whether or not it has been rotated.

2. A portable digital communication apparatus as claimed in claim 1, wherein the sliding/hinge housing is linearly slidable on the bottom surface of the first housing.

3. A portable digital communication apparatus as claimed in claim 1 or 2, wherein the sliding/hinge housing is provided with a first speaker unit on its top surface, the first speaker unit is composed of a stereo speaker unit to provide stereo sound, and the first speaker unit is always exposed regardless of whether or not the rotational housing has been rotated.

4. A portable digital communication apparatus as claimed in one of claims 1 to 3, wherein the rotational housing is provided with a pair of connecting arms and a opening defined between the connecting arms, and each end of the connecting arms is coupled to the sliding/hinge housing so that the sliding/hinge housing is positioned in the opening.

5. A portable digital communication apparatus as claimed in one of claims 1 to 4, wherein the first housing is provided with, on its top surface, a speaker, a display disposed adjacent to the speaker, and a first key array composed of a number of keys disposed adjacent to the display.

6. A portable digital communication apparatus as claimed in one of claims 1 to 5, wherein the rotational housing is provided with, on its top surface, a camera lens; a lighting unit disposed adjacent to the camera lens; a second key array composed of a number of keys disposed adjacent to the lighting unit; a microphone unit disposed adjacent to the second key array; and, on its bottom surface, a battery pack.

7. A portable digital communication apparatus as claimed in claim 6, wherein the camera lens and the lighting unit are visually exposed to a user only often rotation of the rotational housing, while the second key array is visually exposed to a user when the sliding/hinge housing has moved a predetermined distance or when the rotational housing has been rotated.

8. A portable digital communication apparatus as claimed in one of claims 1 to 7, wherein a range of rotation of the rotational housing is 180° or less.

9. A portable digital communication apparatus as claimed in claim 1, wherein:
the sliding/hinge housing has a first speaker unit; and
the rotational housing is slidable along the longitudinal direction relative to the first housing and faces the bottom surface of the first housing.

10. A portable digital communication apparatus as claimed in claim 9, wherein the first housing is provided with, on its top surface, a second speaker unit; a display unit disposed adjacent to the second speaker unit; and a first key array composed of a number of keys disposed adjacent to the display unit.

11. A portable digital communication apparatus as claimed in claim 10, wherein the rotational housing is provided with, on its top surface, a camera lens; a lighting unit disposed adjacent to the camera lens; a second key array composed of a number of keys disposed adjacent to the lighting unit; a microphone unit disposed adjacent to the second key array; and, on its bottom surface, a battery pack.

12. A portable digital communication apparatus as claimed in claim 11, wherein, when the sliding/hinge housing has completely performed a sliding movement, the first and second key arrays are disposed adjacent to each other and, when the rotational housing has been completely rotated, the first speaker unit and the lighting unit are disposed adjacent to each other, and the second speaker unit and the battery pack are disposed adjacent to each other.

13. A portable digital communication apparatus comprising:
a first housing extending in a longitudinal direction;
a sliding/hinge housing which is positioned on a bottom surface of the first housing for sliding movement along the longitudinal direction; and
a rotational housing provided with, on its top surface, a number of keys which are exposed or hidden according to whether or not the sliding/hinge housing has moved or not, the rotational housing being coupled to a side surface of the sliding/hinge housing about a hinge axis which extends perpendicularly to the longitudinal direction, so that a top surface or bottom surface of the rotational housing can selectively face the bottom surface of the first housing, according to whether or not the rotational housing has been rotated, such that the sliding/hinge housing is exposed regardless of whether or not the rotational housing has been rotated.

14. A portable digital communication apparatus as claimed in claim 13, wherein the sliding/hinge housing is linearly slidable on the bottom surface of the first housing.

15. A portable digital communication apparatus as claimed in claim 13 or 14, wherein the sliding/hinge housing is provided with a first speaker unit on a top surface, the first speaker unit being composed of a stereo speaker unit to provide stereo sound, and the first speaker unit is always exposed regardless of whether or not the rotational housing has been rotated.

16. A portable digital communication apparatus as claimed in one of claims 13 to 15, wherein the rotational housing is provided with a pair of symmetric connecting arms and an opening defined between the connecting arms to position the sliding/hinge housing therein, and each end of the connecting arms is coupled to the sliding/hinge housing so that the sliding/hinge housing is positioned in the opening.

17. A portable digital communication apparatus as claimed in one of claims 13 to 16, wherein the first housing is provided with, on a top surface, a speaker; a display disposed adjacent to the speaker; and a first key array composed of a number of keys disposed adjacent to the display.

18. A portable digital communication apparatus as claimed in one of claims 13 to 17, wherein the rotational housing is provided with, on its top surface a camera lens a lighting unit disposed adjacent to the camera lens; a microphone unit and a key array; and, on its bottom surface, a battery pack; and wherein, while the camera lens and the lighting unit are visually exposed to a user only after rotation of the rotational housing, the key array is visually exposed to a user only when the sliding/hinge housing has been moved a predetermined distance or after the rotational housing has been rotated.

19. A portable digital communication apparatus as claimed in one of claims 13 to 18, wherein a range of rotation of the rotational housing is 180° or less.
